# EUROPEAN PATENT APPLICATION

(11) **EP 4 600 530 A1**
(43) Date of publication of application: **13.08.2025**
(21) Application number: 23874775.2
(22) Date of filing: 29.09.2023
(51) Int. Cl.: F16J 15/3232, F16J 15/3252, F01L 3/08

(54) **VALVE-STEM-SEALING SEAL APPARATUS**

(30) Priority: 04.10.2022 JP 2022160172
(71) Applicant: NOK Corporation, Minato-ku Tokyo 105-8585 (JP)
(72) Inventor: KISHIRO, Masamichi, Fukushima-shi, Fukushima 960-1193 (JP); MIYAKAWA, Kana, Fukushima-shi, Fukushima 960-1193 (JP)
(74) Representative: TBK
(86) International application number: PCT/JP2023/035637
(87) International publication number: WO 2024/075648

(57) **Abstract**

Variations in oil leakage amount are suppressed, and an oil leakage amount is stabilized. A valve stem seal sealing device (1) that seals a gap between a valve stem (2), and a valve stem guide (3) that guides movement in an axis (X) direction of the valve stem (2), includes a metal ring (5) in an annular shape to be attached to an end portion of the valve stem guide (3), and a seal body (7) that is fixed integrally with the metal ring (5) and that slidably contacts an outer peripheral surface of the valve stem (2), the seal body (7) has a seal lip (721, 722) that slidably contacts the outer peripheral surface of the valve stem (2), a back pressure lip (725) that slidably contacts the outer peripheral surface of the valve stem (2) on a valve stem guide (3) side from the seal lip (721, 722), and a back pressure auxiliary lip (726) that slidably contacts the outer peripheral surface of the valve stem (2), between the back pressure lip (725) and the seal lip (721, 722).

## Description

### Technical Field

The present invention relates to a valve stem seal sealing device.

### Background Art

Conventionally, for an engine valve of an automobile engine, a valve stem seal sealing device has been used to adjust the amount of engine oil that is supplied onto the sliding surface of the valve stem guide that supports the valve stem of the intake/exhaust valve movably in the axial direction, and to seal up exhaust gas and the like.

This valve stem seal sealing device is a seal for intentionally causing oil leakage and controlling the leakage amount so as to guide a suitable amount of oil to between the valve stem guide and the valve stem during operation of an internal combustion engine.

In the valve stem seal sealing device, it is very important to control the oil leakage amount because if the leakage amount of oil is too small, seizure will occur between the valve stem guide and the valve stem, and if the leakage amount of oil is too large, oil will be excessively introduced into the combustion chamber and cause problems such as white smoke generation.

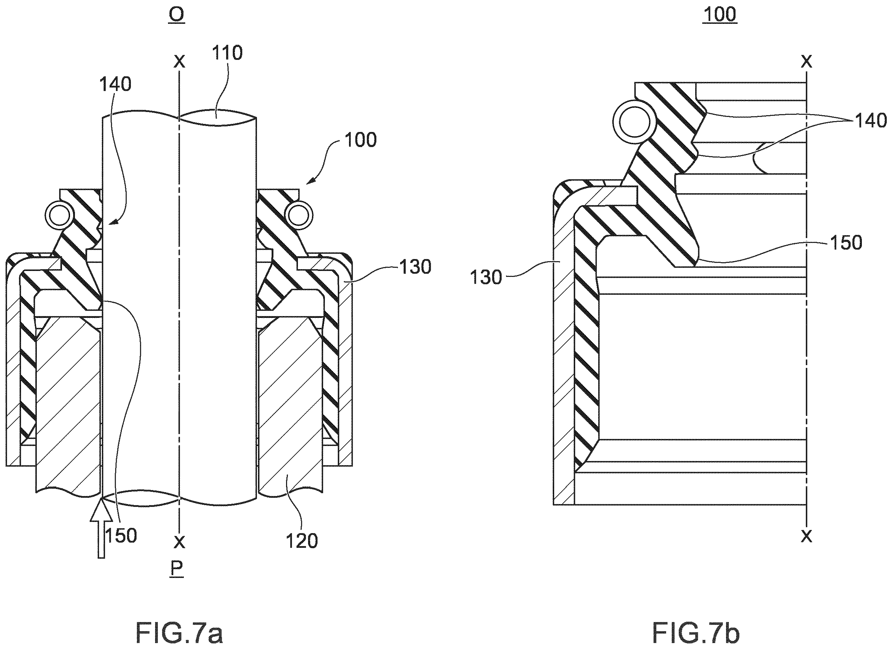

As shown in Fig. 7 (A) and (B), a valve stem seal sealing device 100 includes a reinforcement ring 130 having a cylindrical shape and made of metal, which is provided on an outer periphery side of a valve stem guide 120, and a seal lip 140 formed of an elastic body such as rubber, which is attached to one end side of the reinforcement ring 130 by vulcanization adhesion or the like, and slides with an outer peripheral surface of the valve stem 110.

In the valve stem seal sealing device 100 as above, the seal lip 140 slides in contact with the outer peripheral surface of the valve stem 110, and thereby seals up oil on an oil chamber side O. Furthermore, in addition to this, a back pressure lip 150 that slides in contact with the outer peripheral surface of the valve stem 110 is provided on a port side P of the seal lip 140 to stabilize the oil leakage amount when back pressure (thick white arrow) at the port pressure loading time is applied, and to take a measure against lip opening valve when the seal lip 140 and the outer peripheral surface of the valve stem 110 slide (see Patent Literature 1, for example).

### Document List

### Patent Literature

Patent Literature 1: Japanese Patent Application Publication No. 2016-194343

### Summary of Invention

### Technical Problem

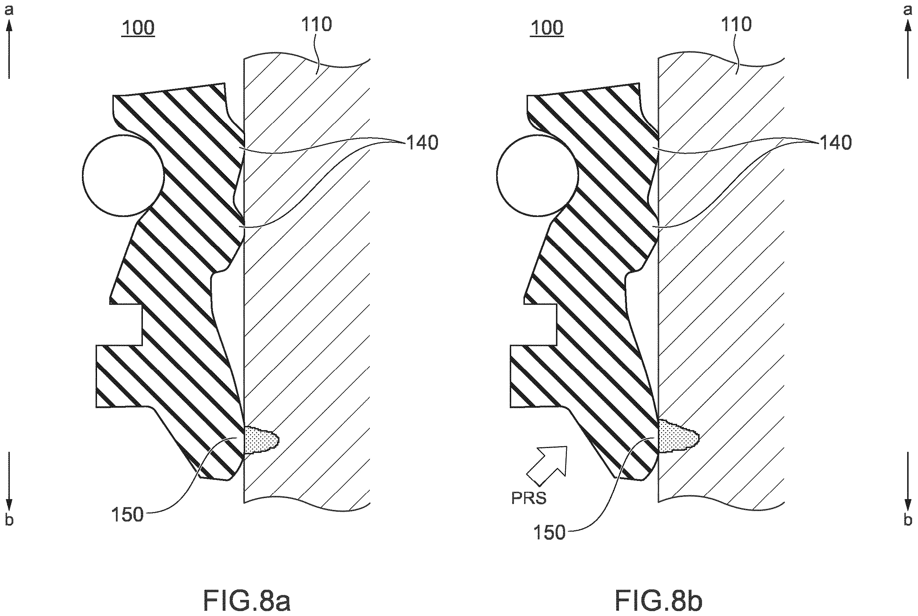

In the valve stem seal sealing device 100 with the configuration as above, as shown in Fig. 8 (B), when back pressure PRS is applied at the port pressure loading time, axial contact force (surface pressure) of the back pressure lip 150 to the valve stem 110 becomes larger as compared to a case (A) in which the back pressure PRS is not applied. In such a case, depending on the use conditions, the set conditions such as the oil leakage amount from the lip, there is a concern that the oil leakage amount due to the back pressure lip 150 scraping out oil may increase at a valve closing time when the valve stem 110 moves to the oil chamber side O.

The present invention is made in view of the aforementioned problem, and it is an object of the present invention to provide a valve stem seal sealing device that can suppress variations in an oil leakage amount and stabilize the oil leakage amount.

### Solution to Problem

The present invention is a valve stem seal sealing device that seals a gap between a valve stem, and a valve stem guide that guides movement in an axial direction of the valve stem, and includes a metal ring in an annular shape to be attached to an end portion of the valve stem guide, and a seal body that is fixed integrally with the metal ring and that slidably contacts an outer peripheral surface of the valve stem, and the seal body has a seal lip that slidably contacts the outer peripheral surface of the valve stem, a back pressure lip that slidably contacts the outer peripheral surface of the valve stem on a valve stem guide side from the seal lip, and a back pressure auxiliary lip that slidably contacts the outer peripheral surface of the valve stem between the back pressure lip and the seal lip.

It is preferable that a plurality of the back pressure auxiliary lips are provided to be evenly distributed at constant intervals in a circumferential direction.

It is preferable that the back pressure auxiliary lip does not have a contact surface in a part thereof.

It is preferable that the back pressure auxiliary lip has a contact surface over an entire circumference thereof.

### Effects of Invention

According to the present invention, it is possible to realize the valve stem seal sealing device that can suppress variations in the oil leakage amount and stabilize the oil leakage amount.

### Brief Description of Drawings

[Fig. 1] (A) is a sectional view illustrating a fitted state of a valve stem seal sealing device according to a first embodiment of the present invention; and (B) is a semi-sectional view illustrating a configuration of the valve stem seal sealing device.
[Fig. 2] Fig. 2 is a perspective sectional view illustrating the configuration of the valve stem seal sealing device according to the first embodiment of the present invention.
[Fig. 3] Fig. 3 is a sectional view illustrating (A) an axial contact force (surface pressure) distribution of a back pressure lip when back pressure is not applied in the valve stem seal sealing device according to the first embodiment of the present invention, and (B) an axial contact force (surface pressure) distribution of the back pressure lip when back pressure is applied.
[Fig. 4] Fig. 4 is a graph illustrating an axial contact force of the back pressure lip with respect to port pressure of the valve stem seal sealing device according to the first embodiment of the present invention.
[Fig. 5] (A) is a sectional view illustrating a configuration of a valve stem seal sealing device according to a second embodiment of the present invention; and (B) is a semi-sectional view illustrating the configuration of the valve stem seal sealing device.
[Fig. 6] Fig. 6 is a sectional view illustrating a configuration of a back pressure auxiliary lip in a valve stem seal sealing device according to another embodiment of the present invention.
[Fig. 7] (A) is a sectional view illustrating a fitted state of a conventional valve stem seal sealing device; and (B) is a semi-sectional view illustrating a configuration of the conventional valve stem seal sealing device.
[Fig. 8] Fig. 8 is a sectional view illustrating (A) an axial contact force (surface pressure) distribution of a back pressure lip when back pressure is not applied in the conventional valve stem seal sealing device; and (B) an axial contact force (surface pressure) distribution of the back pressure lip when back pressure is applied.

### Description of Embodiments

### <First Embodiment>

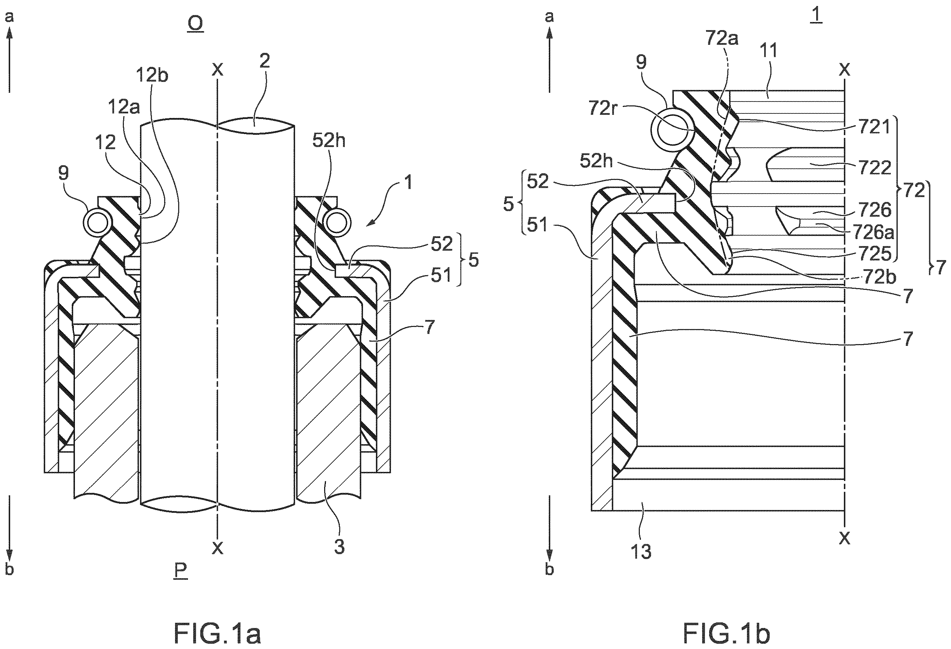

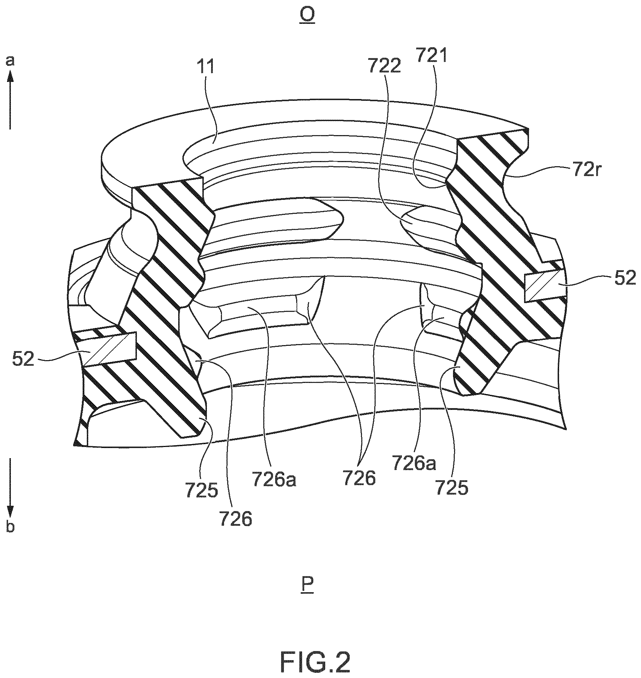

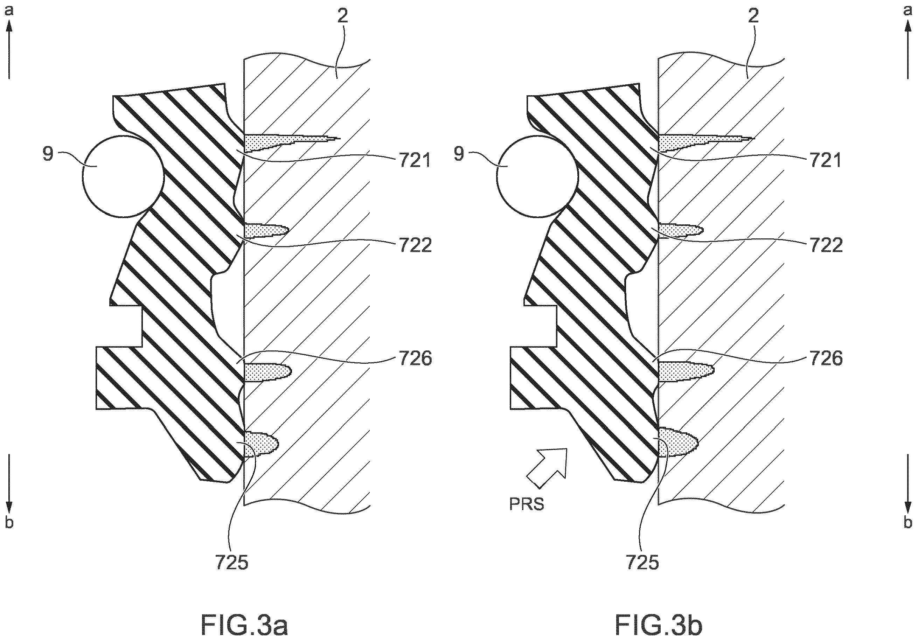

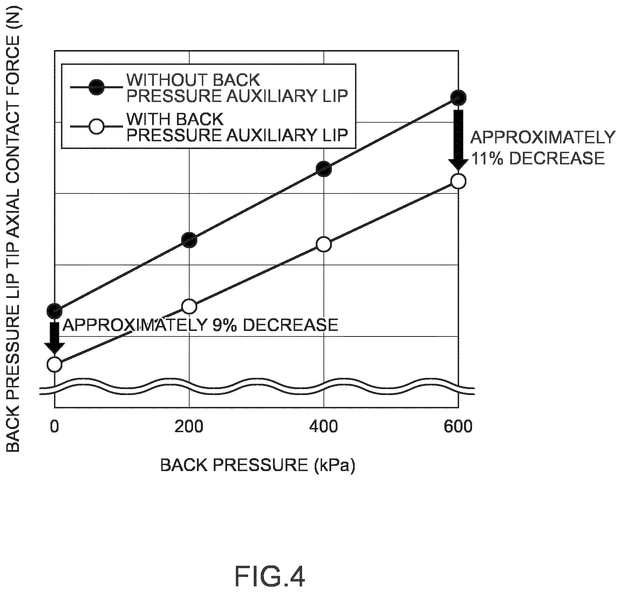

Hereinafter, a first embodiment that is one example of the present invention will be described with reference to the drawings. Fig. 1 is a sectional view (A) illustrating a fitted state of a valve stem seal sealing device 1 according to the first embodiment of the present invention, and a semi-sectional view (B) illustrating a configuration of the valve stem seal sealing device 1. Fig. 2 is a perspective sectional view illustrating the configuration of the valve stem seal sealing device according to the first embodiment of the present invention. Fig. 3 is a sectional view illustrating an axial contact force (surface pressure) distribution of a back pressure lip (A) when back pressure is not applied in the valve stem seal sealing device according to the first embodiment of the present invention, and an axial contact force (surface pressure) distribution of the back pressure lip (B) when back pressure is applied. Fig. 4 is a graph illustrating an axial contact force of the back pressure lip with respect to port pressure of the valve stem seal sealing device according to the first embodiment of the present invention.

Note that in explanation of the first embodiment of the present invention, for convenience of explanation, an arrow "a" direction in an axial direction along an axis X is defined as an oil chamber side O, and an arrow "b" direction in the axial direction along the axis X is defined as a port side P.

As illustrated in (A) and (B) of Fig. 1, the valve stem seal sealing device 1 according to the present embodiment is used for a valve of an exhaust system provided in a cylinder head of an automobile engine, for example. However, the valve stem seal sealing device 1 is not limited to this and may be used for a valve of an intake system.

The valve stem seal sealing device 1 is fitted to a valve stem guide 3 that supports a valve stem 2 so that the valve stem can reciprocate in the axial direction, adjusts a leakage amount of engine oil on the oil chamber side O that is supplied to a sliding surface between the valve stem 2 and the valve stem guide 3, and seals up exhaust gas and the like discharged from the port side P.

The valve stem seal sealing device 1 is formed in an annular shape with both ends opened and has a tip opening portion 11 on one end side in an axis X direction, and a base opening portion 13 on another end side in the axial direction, respectively. The tip opening portion 11 is an opening portion that faces the oil chamber side O when the valve stem seal sealing device 1 is fitted to the valve stem guide 3. The base opening portion 13 is an opening portion where the valve stem seal sealing device 1 is first fitted on the valve stem guide 3.

The valve stem seal sealing device 1 includes a metal ring 5, and a seal body 7 made of an elastic body in a rubbery state is integrally fixed to the metal ring 5. The metal ring 5 and the seal body 7 are integrally fixed by vulcanization adhesion.

The metal ring 5 is an annular member of a metal that covers an end portion on one end side (oil chamber side O) in the axis X direction of the valve stem guide 3 from outside. The metal ring 5 has a portion in a cylindrical shape having a predetermined length along the axis X direction (hereinafter, this will be referred to as a "cylindrical portion") 51, and a portion in a ring shape that extends from an end portion on the one end side (oil chamber side O) in the axis X direction of the cylindrical portion 51 toward an outer peripheral surface of the valve stem 2 (hereinafter, this will be referred to as a "ring portion") 52.

The cylindrical portion 51 has an inside diameter larger than an outside diameter of the valve stem guide 3. Furthermore, an end portion on another end side (port side P) in the axis X direction of the cylindrical portion 51 forms the base opening portion 13 described above.

The ring portion 52 has an open end 52h in a center thereof, and an inside diameter of the open end 52h is larger than an outside diameter of the valve stem 2. That is to say, in the metal ring 5, there is a gap such that the open end 52h of the ring portion 52 and the outer peripheral surface of the valve stem 2 do not contact each other.

The seal body 7 has a seal fitting portion 71, a seal body portion 72, and a seal connection portion 73 that connects the seal fitting portion 71 and the seal body portion 72. The seal fitting portion 71 is a cylindrical portion having a predetermined length along the axis X direction, and is fixed to an inner peripheral surface of the metal ring 5, and is fitted on and fixed to an outer peripheral surface of the valve stem guide 3. The seal fitting portion 71 has such a length that it does not protrude from the end portion on the other end side (port side P) of the cylindrical portion 51 of the metal ring 5.

The seal connection portion 73 is a ring-shaped portion that extends toward the outer peripheral surface of the valve stem 2 so as to cover the ring portion 52 of the metal ring 5 entirely from an end portion on the one end side (oil chamber side O) in the axis X direction of the seal fitting portion 71, with an end portion inside thereof being integrally joined with the seal body portion 72. The seal connection portion 73 is integrally fixed to the ring portion 52 of the metal ring 5.

The seal body portion 72 is a portion in a cylindrical shape as a whole that is integrally fixed so as to cover the open end 52h of the ring portion 52 of the metal ring 5, and is provided to slidably contact the outer peripheral surface of the valve stem 2.

The seal body portion 72 has a recessed part 72r in an annular shape formed on an outer peripheral surface thereof, and a garter spring 9 is attached to the recessed part 72r. The garter spring 9 increases an axial contact force (surface pressure) of the seal body portion 72 with respect to the valve stem 2 by a tension force thereof.

The seal body portion 72 is bent in a substantially chevron shape (L-shape) from a vicinity of a center that is in a vicinity of the open end 52h of the ring portion 52 of the metal ring 5, and has a truncated-cone-shaped surface 72a (indicated by a broken line) closer to the oil chamber side O than the vicinity of the center, and a truncated-cone-shaped surface 72b (indicated by a broken line) closer to the port side P than the vicinity of the center.

The seal body portion 72 has a main lip 721 and a sub lip 722 that slidably contact the outer peripheral surface of the valve stem 2 with respect to the truncated-cone-shaped surface 72a. The main lip 721 and the sub lip 722 are provided continuously in order of the sub lip 722 and the main lip 721 from the vicinity of the center toward the oil chamber side O.

Here, the main lip 721 is provided in an endless circular shape that is continuous in a circumferential direction. A plurality of sub lips 722 are provided at predetermined intervals in the circumferential direction. However, without being limited to this, the sub lip 722 may be provided in an endless circular shape continuous in the circumferential direction, or a plurality of sub lips 722 may be disposed at unequal intervals in the circumferential direction. The main lip 721 and sub lips 722 are given a tension force that presses against the outer peripheral surface of the valve stem 2 due to presence of the garter spring 9.

The main lip 721 is disposed on the one end side (oil chamber side O) from the sub lip 722 in the axis X direction, and is adjacent to the tip opening portion 11. The main lip 721 is a portion in a conical annular shape that gradually decreases in diameter toward the outer peripheral surface of the valve stem 2, and has a lip tip portion that contacts the outer peripheral surface of the valve stem 2. An inside diameter of the main lip 721 is smaller than an outside diameter of the valve stem 2 and has a predetermined interference with respect to the valve stem 2.

The sub lip 722 is disposed adjacently to the main lip 721 on the other end side (port side P) from the main lip 721 in the axis X direction and is a portion in a wedge shape that gradually decreases in diameter toward the outer peripheral surface of the valve stem 2 similarly to the main lip 721.

The sub lip 722 also has a lip tip portion that contacts the outer peripheral surface of the valve stem 2. An inside diameter of the sub lip 722 is smaller than the outside diameter of the valve stem 2 and has a predetermined interference with respect to the valve stem 2.

In this case, a protrusion amount of the sub lip 722 from the truncated-cone-shaped surface 72a is set to be slightly larger than a protrusion amount of the main lip 712 from the truncated-cone-shaped surface 72a, but since the truncated-cone-shaped surface 72a decreases in diameter toward the oil chamber side O, the interference of the main lip 721 with respect to the valve stem 2 is set to be larger than the interference of the sub lip 722 with respect to the valve stem 2.

That is to say, since the seal body portion 72 has the sub lip 722 that is adjacent to the main lip 721 and is formed at the position closer to the port side P than the main lip 721, in addition to the main lip 721 formed at the position closer to the oil chamber side O, the main lip 721 is prevented from being completely in contact with the outer peripheral surface of the valve stem 2.

Specifically, when the sub lip 722 contacts the outer peripheral surface of the valve stem 2 following the main lip 721, the sub lip 722 suppresses the axial contact force (surface pressure) with which the main lip 721 is pressed against the outer peripheral surface of the valve stem 2. As a result, the seal body portion 72 makes it possible to appropriately leak the oil on the oil chamber side O to the port side P via the main lip 721 and the sub lip 722.

Note that as long as it is possible to appropriately leak the oil on the oil chamber side O to the port side P, the interference of the main lip 721 does not necessarily have to be larger than the interference of the sub lip 722, and the interference of the main lip 721 may be the same as the interference of the sub lip 722, or contrary to the above, the interference of the main lip 721 may be smaller than the interference of the sub lip 722.

Furthermore, the seal body portion 72 has a back pressure lip 725 and a back pressure auxiliary lip 726 that slidably contact the outer peripheral surface of the valve stem 2, with respect to the truncated-cone-shaped surface 72b. The back pressure lip 725 and the back pressure auxiliary lip 726 are provided continuously in order of the back pressure auxiliary lip 726 and the back pressure lip 725 from the vicinity of the center toward the port side P.

The back pressure lip 725 protrudes obliquely downward from an end portion closer to the port side P toward the outer peripheral surface of the valve stem 2, and has a lip tip portion that contacts the outer peripheral surface of the valve stem 2. The back pressure lip 725 prevents the back pressure PRS from an inside of a combustion chamber from reaching the main lip 721 and the sub lip 722 through the gap between the valve stem guide 3 and the valve stem 2 to cause valve opening, or excessive deformation.

Furthermore, the seal body portion 72 has the back pressure auxiliary lip 726 that is provided to be adjacent to the back pressure lip 725 with respect to the vicinity of the open end 52h of the metal ring 5 in the truncated-cone-shaped surface 72b, between the back pressure lip 725 and the sub lip 722. The back pressure auxiliary lip 726 is a portion that protrudes in a wedge shape toward the outer peripheral surface of the valve stem 2, and has a lip tip portion 726a that contacts the outer peripheral surface of the valve step 2.

An inside diameter of the back pressure lip 725 is smaller than the outside diameter of the valve stem 2, and has a predetermined interference with respect to the valve stem 2. Furthermore, an inside diameter of the back pressure auxiliary lip 726 is smaller than the outside diameter of the valve stem 2, and has a predetermined interference with respect to the valve stem 2.

In this case, a protrusion amount of the back pressure auxiliary lip 726 from the truncated-cone-shaped surface 72b is set to be slightly larger than a protrusion amount of the back pressure lip 725 from the truncated-cone-shaped surface 72b, but since the truncated-cone-shaped surface 72b decreases in diameter toward the port side P, the interference of the back pressure lip 725 with respect to the valve stem 2 is set to be larger than the interference of the back pressure auxiliary lip 726 with respect to the valve stem 2.

Note that a plurality of back pressure auxiliary lips 726 are disposed at equal intervals in the circumferential direction. However, without being limited to this, a plurality of back pressure auxiliary lips 726 may be disposed at unequal intervals in the circumferential direction.

Specifically, when the back pressure auxiliary lip 726 contacts the outer peripheral surface of the valve stem 2, following the back pressure lip 725, pressure of the back pressure PRS is distributed to the back pressure auxiliary lip 726 when the back pressure auxiliary lip 726 receives the back pressure PRS (pressure by exhaust gas from an exhaust port) like a thick white arrow in Fig. 3 (B) from the port side P.

As a result, the pressure to the back pressure lip 725 decreases, and therefore it is possible to reduce the axial contact force (surface pressure) with which the back pressure lip 725 deforms to wrap itself around the outer peripheral surface of the valve stem 2, that is, the back pressure lip 725 is pressed against the outer peripheral surface of the valve stem 2.

As is obvious from Fig. 3 (A) and (B), since the back pressure auxiliary lip 726 is in contact with the outer peripheral surface of the valve stem 2, the pressure is distributed to the back pressure auxiliary lip 726, and thus increase in the axial contact force (surface pressure) of the back pressure lip 725 decreases even in the case (B) where there is the back pressure PRS, as compared to the case (A) where there is not the back pressure PRS.

As a result, it is possible to reduce an amount of oil scraped out to the port side P by the back pressure lip 725 with respect to the oil leakage amount of the oil on the oil chamber side O leaking to the port side P via the main lip 721 and the sub lip 722, and to restrain the oil leakage amount from increasing, at the valve closing time when the valve stem 2 moves to the oil chamber side O.

Furthermore, the back pressure auxiliary lip 726 has the lip tip portion 726a in an arc shape in which a rounding radius of the lip tip portion 726a is increased as much as possible so that oil (oil film) passing through the back pressure lip 725 at a valve opening time of the valve stem 2 can be returned as it is at the valve closing time. That is to say, the lip tip portion 726a of the back pressure auxiliary lip 726 is set so that a contact surface pressure gradient is the same between the oil chamber side O and the port side P. Note that a shape of the lip tip portion 726a may be a gentle arc shape close to point contact, or a flat shape that is in surface contact with the outer peripheral surface of the valve stem 2.

As a result that the rounding radius of the lip tip portion 726a of the back pressure auxiliary lip 726 is set to be as large as possible, the scraping amount of the oil at the valve closing time by the lip tip portion 726a is restrained from increasing.

That is to say, since the surface pressure of the back pressure lip 725 does not greatly increase as a result of the back pressure auxiliary lip 726 contacting the outer peripheral surface of the valve stem 2 even at the valve opening time of the valve stem 2, the oil passing through the back pressure lip 725 can be returned as it is at the valve closing time. Note that the lip tip portion 726a of the back pressure auxiliary lip 726 is in a shape that does not contribute to the oil leakage amount of the oil on the oil chamber side O that is appropriately leaked to the port side P.

Note that it is possible to provide any number of back pressure auxiliary lips 726 according to the axial contact force (surface pressure) that is generated at the lip tip portion of the back pressure lip 725 that contacts the outer peripheral surface of the valve stem 2, and a variation amount of the oil leakage amount due to the back pressure PRS. Furthermore, the back pressure auxiliary lips 726 may be individually different in the length in the circumferential direction.

In this case, in a portion where the back pressure auxiliary lips 726 are present in the seal body portion 72, the axial contact force (surface pressure) of the back pressure lip 725 decreases, whereas in a portion where no back pressure auxiliary lip 726 is present, the axial contact force (surface pressure) of the back pressure lip 725 increases.

Therefore, in the seal body portion 72, it is possible to adjust the oil leakage amount of the oil scraped off by the back pressure lip 725 as desired depending on what length the back pressure auxiliary lip 726 is desired to have, and how many back pressure auxiliary lips 726 are provided at what intervals.

In the above configuration, in the valve stem seal sealing device 1, in addition to the back pressure lip 725, the back pressure auxiliary lip 726 is adjacently provided, with respect to the truncated-cone-shaped surface 72b that is an inner peripheral surface of the seal body portion 72, and the lip tip portion 726a of the back pressure auxiliary lip 726 is brought into contact with the outer peripheral surface of the valve stem 2.

As a result, as illustrated in Fig. 4, the valve stem seal sealing device 1 with the back pressure auxiliary lip 726 indicated by a white circle can reduce the axial contact force (surface pressure) that is generated at the lip tip portion of the back pressure lip 725 as compared to the case without providing the back pressure auxiliary lip 726 (without the back pressure auxiliary lip, indicated by a black circle). In this case, according to an experiment, the axial contact force (surface pressure) generated at the lip tip portion of the back pressure lip 725 decreases from approximately 9 percent to 11 percent as the back pressure PRS increases.

As above, when the back pressure auxiliary lip 726 is not provided in the valve stem seal sealing device 1, the axial contact force (surface pressure) of the back pressure lip 725 to the outer peripheral surface of the valve stem 2 becomes very large as the back pressure PRS increases as at the port pressure loading time, as compared to the case in which the back pressure auxiliary lip 726 is provided.

Thus, the oil that leaks from the back pressure lip 725 at the valve opening time of the valve stem 2 is scraped off by the back pressure lip 725 at the valve closing time of the valve stem 2 and the oil does not completely return to the oil chamber side O, and the amount of the oil on the oil chamber side O decreases.

However, since the axial contact force (surface pressure) generated at the lip tip portion of the back pressure lip 725 is reduced as a whole as compared to the case in which the back pressure auxiliary lip 726 is not provided as a result of providing the back pressure auxiliary lip 726 so that it is adjacent to the back pressure lip 725 in addition to the back pressure lip 725 as in the valve stem seal sealing device 1, the variation in the oil leakage amount in which the oil is scraped off by the back pressure lip 725 at the valve closing time decreases and the oil leakage amount can be stabilized.

Furthermore, since a plurality of back pressure auxiliary lips 726 of the valve stem seal sealing device 1 are provided to be equally distributed at constant intervals in the circumferential direction according to the variation amount of the oil leakage amount, it is possible to stabilize the oil leakage amount at the port pressure loading time.

Furthermore, in the back pressure auxiliary lip 726 of the valve stem seal sealing device 1, by making the rounding radius of the lip tip portion 726a as large as possible to make the contact surface pressure gradient the same between the oil chamber side O and the port side P, it is possible to suppress scraping-off of the oil at the valve closing time by the lip tip portion 726a, and to stabilize the oil leakage amount.

### <Second Embodiment>

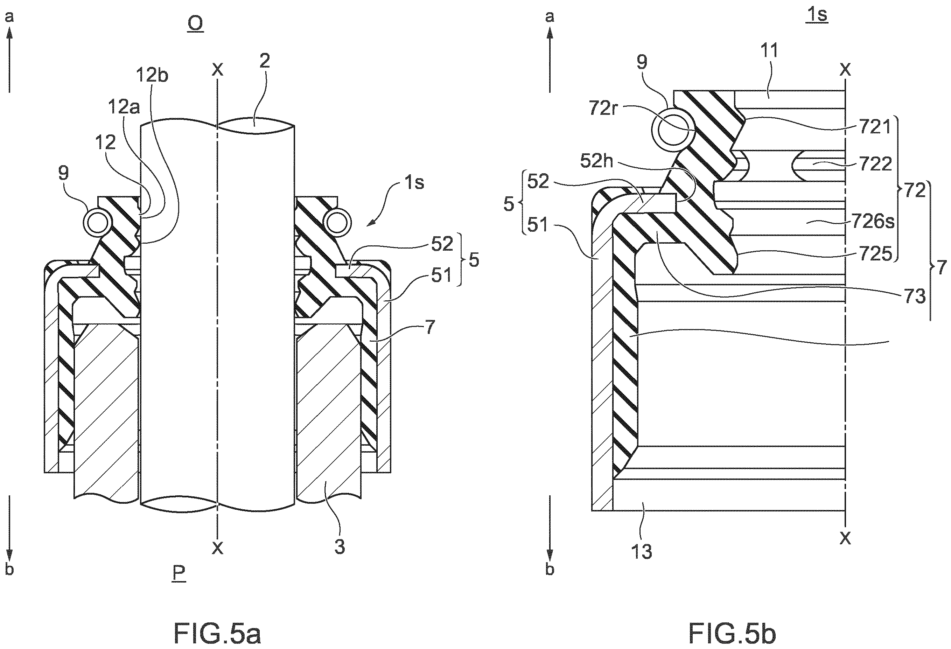

As illustrated in Fig. 5 by assigning the same reference signs to corresponding portions to those in Fig. 1, a valve stem seal sealing device 1s in a second embodiment is common in basic structure to the valve stem seal sealing device 1 in the first embodiment, but instead of the back pressure auxiliary lip 726, a back pressure auxiliary lip 726s is provided, which is in contact with an entire peripheral surface in an endless circular shape continuous in a circumferential direction.

In the valve stem seal sealing device 1s, it is possible to use the back pressure auxiliary lip 726s that is in contact with the entire peripheral surface when there is no influence on an oil leakage amount, and an effect thereof is similar to the effect of the first embodiment, and it is possible to suppress variations in the oil leakage amount, and to stabilize the oil leakage amount. Note that a surface pressure gradient may be intentionally provided for the back pressure auxiliary lip 726s. In this case, it is possible to adjust a seal function, that is, the oil leakage amount via the back pressure auxiliary lip 726s.

### <Other Embodiments>

The valve stem seal sealing devices 1 and 1s of the present invention are described above by citing the preferable embodiments, but the valve stem seal sealing devices 1 and 1s of the present invention are not limited to the configurations of the above-described embodiments. For example, in the above-described first and second embodiments, it is possible to adopt all combinations, such as providing a sub lip 722 in a ring shape for the back pressure auxiliary lips 726 provided to be evenly distributed, or providing the sub lip 722 in a ring shape for the back pressure auxiliary lip 726s in a ring shape.

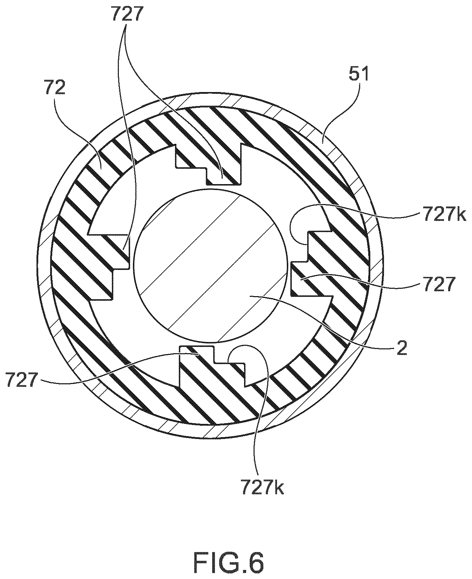

Furthermore, in the aforementioned first embodiment, the case in which the plurality of back pressure auxiliary lips 726 that are disposed to be evenly distributed are provided is described, but the present invention is not limited to this, and back pressure auxiliary lips 727 in a shape as illustrated in Fig. 6 may be provided to be evenly distributed.

In this case, in a part of the back pressure auxiliary lip 727, a cutout 727k is provided. As a result, the seal body portion 72 can suppress scraping-out of oil at a valve closing time of a valve stem 2, and stabilize the oil leakage amount, as in the first embodiment and the second embodiment while suppressing increase in sliding resistance as compared to the back pressure auxiliary lip 727 where no cutout 727k is present. Note that the back pressure auxiliary lips 727 are not limited to the case in which they are provided to be evenly distributed, but a plurality of back pressure auxiliary lips 727 may be disposed at unequal intervals in the circumferential direction.

In addition, those skilled in the art can properly alter the valve stem seal sealing devices 1 and 1s of the present invention, and can change the combinations of various components, according to the conventionally well-known knowledge. These changes are also included in the scope of the present invention as a matter of course as long as the configuration of the present invention is included.

### List of Reference Signs

1, 1s, 100 valve stem seal sealing device, 2, 110 valve stem, 3, 120 valve stem guide, 5 metal ring, 7 seal body, 9 garter spring, 11 tip opening portion, 13 base opening portion, 51 cylindrical portion, 52 ring portion, 52h open end, 71 seal fitting portion, 72 seal body portion, 73 seal connection portion, 130 reinforcement ring, 140 seal lip, 150 back pressure lip, 721 main lip, 722 sub lip, 725 back pressure lip, 726, 727 back pressure auxiliary lip, 726a lip tip portion

## Claims

1. A valve stem seal sealing device that seals a gap between a valve stem, and a valve stem guide that guides movement in an axial direction of the valve stem, comprising:
a metal ring in an annular shape to be attached to an end portion of the valve stem guide; and
a seal body that is fixed integrally with the metal ring and that slidably contacts an outer peripheral surface of the valve stem,
wherein the seal body has
a seal lip that slidably contacts the outer peripheral surface of the valve stem,
a back pressure lip that slidably contacts the outer peripheral surface of the valve stem on a valve stem guide side from the seal lip, and
a back pressure auxiliary lip that slidably contacts the outer peripheral surface of the valve stem between the back pressure lip and the seal lip.

2. The valve stem seal sealing device according to claim 1, wherein a plurality of the back pressure auxiliary lips are provided to be evenly distributed at constant intervals in a circumferential direction.

3. The valve stem seal sealing device according to claim 1 or 2, wherein the back pressure auxiliary lip does not have a contact surface in a part thereof.

4. The valve stem seal sealing device according to claim 1 or 2, wherein the back pressure auxiliary lip has a contact surface over an entire circumference thereof.
